Europäisches Patentamt

European Patent Office

Office européen des brevets

(19)

(11) Numéro de publication: **0 330 789**
**A1**

## (12) DEMANDE DE BREVET EUROPEEN

(21) Numéro de dépôt: **88402515.6**

(22) Date de dépôt: **04.10.88**

(51) Int. Cl.⁴: **C10B 53/02 , F23G 5/027**

(30) Priorité: **01.03.88 FR 8802520**
**14.04.88 FR 8804928**

(43) Date de publication de la demande:
**06.09.89 Bulletin 89/36**

(84) Etats contractants désignés:
**AT BE CH DE ES FR GB GR IT LI LU NL SE**

(71) Demandeur: **Leroux, André Jean**
**47, avenue du Groupe Lorraine**
**F-62117 Brebières(FR)**

Demandeur: **Mercier, Claude**
**Chemin des Marlières**
**F-59500 Lambres les Douai(FR)**

(72) Inventeur: **Leroux, André Jean**
**47, avenue du Groupe Lorraine**
**F-62117 Brebières(FR)**
Inventeur: **Mercier, Claude**
**Chemin des Marlières**
**F-59500 Lambres les Douai(FR)**

(74) Mandataire: **Dossmann, Gérard et al**
**Bureau D.A. Casalonga-Josse**
**Morassistrasse 8**
**D-8000 Munich 5(DE)**

(54) **Dispositif et procédé de fabrication de charbon de bois.**

(57) L'invention a pour objet un dispositif de fabrication de charbon de bois, caractérisé par le fait qu'il comporte un nombre pair de fours de carbonisation (1) sans fond, dont une première moitié de four(s) est en phase de carbonisation du bois, ce(s) four(s) étant relié(s) à un dispositif d'incinération (3) des gaz produits au cours de la carbonisation, relié à un extracteur (4) précédé d'un moyen de dilution des gaz chauds, suivi éventuellement d'un dispositif de lavage (12), l'autre moitié de four(s) (2) est chargée de bois humide et est reliée à un moyen de prélèvement (18) des gaz chauds produits au cours de l'incinération des fours en phase de carbonisation (1) en amont de l'extracteur, ledit moyen de prélèvement étant équipé d'un moyen de dilution des gaz chauds pour les amener à une température compatible avec le bois destiné à être séché et au procédé de mise en oeuvre.

FIG.1

## Dispositif et procédé de fabrication de charbon de bois.

La présente invention est relative à une installation rationnelle de fabrication de charbon de bois assujettie à un système d'élimination des fumées par incinération-dépression et lavage et au procédé de mise en oeuvre d'une telle installation.

L'invention vise également à utiliser une seule installation pour successivement carboniser et sécher le bois et vider le charbon fabriqué.

Les rares chantiers de carbonisation utilisant le préséchage du bois sont astreints à des manutentions longues et nombreuses avec l'emploi de chariots-élévateurs puissants, lourds et coûteux.

Les demandeurs ont découvert qu'il était possible de réduire le nombre de fours au tiers et qu'il était suffisant d'utiliser un petit élévateur classique en remplacement des élévateurs surpuissants nécessaires, jadis au déplacement des fours remplis de poids.

Le gain en personnel est proportionnel sans compter la supression des temps perdus dans les manutentions inutiles.

L'une des techniques actuelles utilisée pour carboniser sans pollution le bois consiste à faire passer les gaz de carbonisation dans un incinérateur pour les détruire.

La présente invention permet la valorisation des calories gratuites engendrées par l'incinération de ces gaz à des fins annexes, telles que le chauffage, mais aussi et surtout à l'utilisation directe de ces calories pour sécher préalablement le bois avant de le transformer en charbon dans le même four, sans aucune manutention et par une simple manipulation de deux clapets.

L'incidence que représente l'humidité des bois sur la carbonisation est importante, le bois idéal à carboniser étant anhydre.

Dans la pratique, la carbonisation peut encore s'effectuer jusqu'à 25 à 30% de taux d'humidité, mais à un tel taux une quantité de bois importante est nécessairement brûlée et perdue pour évacuer l'eau de la masse.

Le temps total de carbonisation est facilement doublé.

Ces pertes en matière et en temps sont naturellement majorées quand le taux d'humidité est encore supérieur.

Il est donc impératif de recourir au séchage du bois.

Le séchage naturel utilisé jusqu'à présent exigeait un stockage d'un an minimum si la situation géographique du chantier était bonne, une surface importante, une bonne exposition au soleil et au vent.

Le coût d'immobilisation, en conséquence, était très important.

Il en résulte qu'un procédé permettant de sécher, sans apport coûteux de calories, le bois, doit faire baisser sensiblement le taux d'exploitation par un gain de temps et de matière première et donner une rentabilité accrue à l'installation.

L'invention a donc pour objet un dispositif de fabrication de charbon de bois, permettant l'élimination des fumées nocives tout en valorisant les calories ainsi produites.

Un autre objet de l'invention est constitué par le procédé de fabrication de charbon de bois, grâce à un tel dispositif.

Le dispositif conforme à l'invention est essentiellement caractérisé par le fait qu'il comporte au moins deux fours de carbonisation sans fond, dont au moins un four est en phase de carbonisation du bois, ce four étant relié à un dispositif d'incinération des gaz produits au cours de la carbonisation relié à un extracteur précédé d'un moyen de dilution des gaz chauds, suivi éventuellement d'un dispositif de lavage, et au moins un autre four est chargé de bois humide et est relié à un moyen de prélèvement des gaz chauds produits au cours de l'incinération des fours en phase de carbonisation, ledit moyen de prélèvement étant équipé d'un moyen de dilution des gaz chauds pour les amener à une température compatible avec le bois destiné à être séché.

Les fours utilisés conformément à l'invention, ont la particularité de ne pas posséder de fond, le bois reposant à même sur une dalle, en particulier de béton réfractaire.

Conformément à l'invention, la partie haute du four en phase de carbonisation est équipée d'une cheminée à manchon escamotable, comportant deux voies, une voie dirigeant les gaz chauds vers un incinérateur lorsque le four fonctionne en carbonisation.

Cette cheminée est reliée par l'intermédiaire de l'incinérateur à un dispositif extracteur créant une dépression du haut du four et de l'incinérateur.

Les gaz provenant des fours entrent dans l'incinérateur à une température d'environ 300°, ces gaz sont brûlés sous l'action conjuguée d'un brûleur pilote à faible consommation d'un apport d'oxygène suffisant pour enflammer les gaz. Au bout de quelques instants de fonctionnement, la flamme pilote n'est plus utile et les gaz présents continuent à brûler en autocombustion. La température de l'incinérateur atteint dans ce cas des valeurs de l'ordre de 800 à 1000° C.

Le tuyau à la sortie de l'incinérateur est équipé d'un dilueur conique permettant de prélever une quantité d'air suffisante pour faire passer la température à la sortie de l'incinérateur qui est de l'ordre de 900 à 1000° C jusqu'à une température inférieure ou égale à environ 200° C.

Le flux ainsi refroidi, chargé en résidus de combustion, de noirets ou particules minuscules solides, est passé dans une colonne de lavage pour être débarrassé de ces particules solides en suspension.

Selon une forme de réalisation particulière, cette colonne de lavage est en partie immergée dans une bâche de réception dont la surface en eau forme une garde hydraulique. Ce dispositif oblige l'air en pression à sortir obligatoirement par la cheminée d'évacuation.

Ce dispositif de lavage est équipé d'un moyen permettant de faire monter l'eau de lavage en recyclage permanent vers des diffuseurs à pulvérisation. Par ailleurs, une vanne à flotteur maintient un niveau constant de la bâche et permet de faire l'appoint nécessaire dû aux pertes en évaporation.

L'air d'extraction du système termine son circuit par sa mise à l'air libre après avoir perdu ses différentes particules solides dans le flux d'eau pulvérisé.

Le tuyau à la sortie de l'incinérateur comporte une dérivation permettant des prélèvements directs de l'air chaud en vue du séchage du bois. Ces dérivations sont reliées dans une gaine de répartition équipée d'un ventilateur et amenant le gaz chaud après dilution éventuelle jusqu'à un four rempli de bois humide.

Le four fonctionnant comme dispositif de séchage comporte à sa partie inférieure une entrée d'air chaud pratiquée de préférence dans la dalle supportant le four en question.

Un système de clapet d'obturation équipant la cheminée à manchon escamotable fixé sur le haut du four est, dans ce cas, ouvert à l'air libre afin de permettre l'élimination du gaz de séchage après son passage dans le bois.

Tout comme précédemment, la dérivation comporte au niveau de la prise de gaz chaud à la sortie de l'incinérateur, un dispositif de dilution constitué par un diluteur conique permettant de faire passer la température de 900 à 1000° C à la sortie de l'incinérateur, à une température inférieure à la température d'inflammation du bois et de l'ordre d'environ 150° C.

Ce dispositif d'adjonction d'air frais peut être réglé suivant la position du cône de dilution par rapport à la partie mâle équipant le tuyau à la sortie de l'incinérateur.

Il est possible, selon cette variante, de prélever à peu près 20% des calories produites à la sortie de l'incinérateur, en vue de les réutiliser pour le séchage du bois.

Conformément à l'invention, il est possible de rajouter d'autres diluteurs coniques dans le but de prélever de l'air chaud pour d'autres applications, notamment pour le chauffage domestique ou industriel, les serres ou toute autre utilisation avec ou sans échangeur - air/liquides caloporteurs - ou pour réaliser du bois torréfié -.

Les fours utilisés conformément à l'invention sont équipés d'un double cadre métallique de sections différentes et pouvant coulisser l'un dans l'autre. Le premier cadre est fixé sur la périphérie du four et l'autre cadre possède un jeu de quatre roues se déplaçant sur des rails eux-mêmes fixés sur un châssis de répartition générale. Les deux cadres varient l'un par rapport à l'autre sous l'effet de quatre vérins, un à chaque angle.

Grâce à ce dispositif, le four peut reposer, soit sur le sol d'une façon étanche, soit peut être relevé légèrement et est maintenu en suspension au cadre roulant. L'ensemble devient alors mobile sur les rails et permet de déplacer sans effort important le charbon de bois fabriqué et reposant sur la dalle.

Sur le côté du four, dans le prolongement des rails, une fosse en contrebas est équipée d'un conteneur de volume suffisant pour recevoir la totalité du charbon produit par le four.

Conformément à l'invention, après la carbonisation, on obture le four afin de ne pas perturber les gaz contenus dans le collecteur provenant des autres fours en cours de carbonisation. On désolidarise le four après carbonisation du bois.

Après relèvement du four, on le déplace sur les rails vers la fosse. Le charbon de bois glisse sur le sol et se déverse en contrebas dans ledit conteneur. Une fois le vidage terminé, le four est repoussé à son emplacement primitif et après desserrage des vérins, le four se trouve prêt à une nouvelle opération.

Conformément à l'invention, le four est équipé d'un mât tubulaire terminé en son sommet par une potence en équerre fixée au couvercle du four. Ce mât coulisse dans un fourreau de section plus grande pour lui permettre de se soulever et de pivoter afin de transmettre le dégagement et l'escamotage du couvercle encastré dans la gorge d'étanchéité du four. Un petit cric hydraulique, placé à la base de la potence permet la variation verticale, et une poignée fixée au mât permet à l'opérateur d'effectuer le mouvement giratoire du couvercle. Celui-ci peut donc être dégagé, libérant l'accès au garnissage du bois.

Simultanément, un couvercle étanche est assujetti sur le conteneur afin de faire office d'étouffoir du charbon encore incandescent.

Le conteneur plein de charbon de bois est emmené sur une aire de refroidissement, alors qu'un autre container vide est disposé à sa place pour subir la même opération lors du déchargement du second four.

Le procédé de fabrication de charbon de bois, conforme à l'invention, est essentiellement caractérisé par le fait que :

(i) que l'on charge dans une première série de fours du bois séché;

(ii) que l'on soumet ce bois à une réaction de carbonisation;

(iii) que l'on fait passer les gaz résultant de la carbonisation dans un incinérateur permettant de décomposer les gaz ainsi produits;

(iv) que les gaz chauds résultant de l'étape d'incinération sont lavés pour partie dans une tour de lavage et pour partie recyclés après dilution avec de l'air pour faire passer la température de ces gaz à la sortie de l'incinérateur à une température inférieure à la température d'inflammation du bois vers une seconde série de fours contenant du bois humide en vue de les sécher.

Selon une variante de réalisation de l'invention, on procède après la réaction de carbonisation, à une désolidarisation du four et on amène le four après décollement vers un conteneur situé dans une fosse de déchargement susceptible de recevoir le charbon de bois ainsi produit, ce conteneur étant fermé de façon étanche après chargement pour étouffer le charbon de bois encore incandescent.

Selon une troisième variante de l'invention, une partie des gaz chauds résultant de l'incinérateur est dérivée pour être utilisée dans des dispositifs de chauffage, en particulier pour le chauffage domestique ou industriel, les serres et autres utilisations.

Les figures suivantes sont destinées à illustrer sans pour autant présenter un caractère limitatif, le fonctionnement du dispositif et des procédés conformes à l'invention.

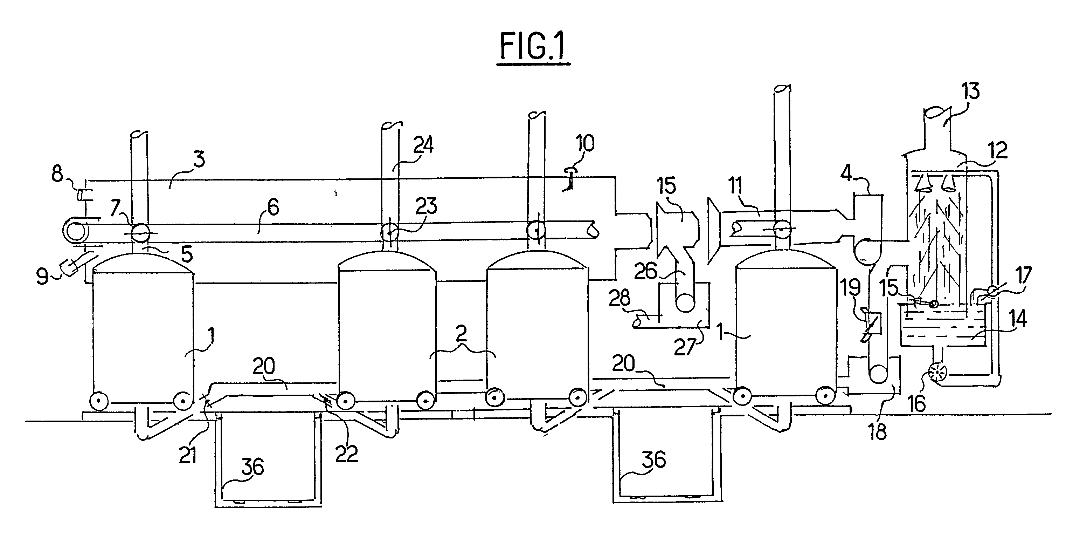

La figure 1 est une représentation générale de l'installation;

la figure 2 représente un module standard composé de deux fours sur châssis et d'un conteneur étouffoir en contrebas.

la figure 3 représente un détail du système de monte et baisse des fours.

Le four 1 reposant sur la dalle réfractaire est allumé pour la carbonisation. Les gaz soumis à dépression par le ventilateur 4 sont aspirés par la cheminée du four 5 puis guidés dans le collecteur d'admission 6 en passant dans la vanne 7.

Ces gaz à haut pouvoir calorifique s'enflamment dans l'incinérateur 3 en présence de l'air comburant amené par une prise réglable 8. Cette combustion se fait spontanément quand l'incinérateur est à température ou au moyen d'une torche d'allumage 9 régulée en température par un asservissement à un couple K 10 situé en bout d'incinérateur.

Les gaz détruits produisent une température située entre 900 et 1000° permanents.

A cette température, le ventilateur 4 ne saurait résister sans se détériorer rapidement.

Sa puissance est calculée avec un large coefficient pour prélever une quantité très importante d'air frais secondaire au moyen d'un dilueur conique 11.

Le ventilateur extracteur 4 ne dépasse donc jamais 200° à l'utilisation alors que la température de passage d'extraction est de 1000° à la sortie de l'incinérateur.

Les gaz pyroligneux, sous cette température, sont totalement détruits, aucun de ces composants ne subsistant au-dessus de 650°.

L'air passant par l'extracteur, encore chargé de résidus de combustions, de "noirets" ou particules minuscules solides, pouvant former une accumulation de poussières. Avant d'être rejeté à l'air libre, ce flux est passé dans une tour de lavage 12 pour être débarrassé de ces particules solides encore en suspension.

Cette colonne de lavage est en partie immergée dans une bâche de réception 14 dont la surface en eau forme une garde hydraulique.

Ce dispositif oblige l'air en pression à sortir obligatoirement par la cheminée d'évacuation 13.

Une pompe 16 fait monter l'eau de lavage en recyclage permanent vers des diffuseurs à pulvérisation.

Une vanne trois voies 17 permet de maîtriser ce débit.

Un dispositif annexe de vanne à flotteur 15 maintient un niveau constant de la bâche et permet de faire l'appoint nécessaire à la suite de pertes en évaporation.

L'air d'extraction du système termine son circuit par sa mise à l'air libre dans la cheminée 13, totalement purifié pour avoir perdu ses particules solides, dans le flux d'eau pulvérisé.

Par la suite, ces particules seront râclées en surface de la bâche, sous forme de mousse.

A la sortie du ventilateur 4 on dispose d'une dérivation d'air chaud qui ne passera pas par la colonne de lavage, mais où sera directement prélevé l'air chaud destiné au séchage.

A l'aide d'un ventilateur 18, l'air chaud en provenance de l'incinérateur via l'extracteur 4, est insufflé dans la gaine 20 de répartition.

Le clapet 21 correspondant au four 1 en cours de carbonisation est obturé.

Par contre, le clapet 22 sur le four en séchage 2 est ouvert.

A l'entrée du ventilateur 18, on a pratiqué une admission d'air frais secondaire 19 muni d'un volet de réglage, mû par un moteur régulateur.

Une sonde de température sur la gaine agit directement sur le moteur régulateur. On peut donc refroidir à loisir cet air, trop chaud, en provenance de l'incinérateur, par une adjonction d'air frais.

Bien que purifiée par l'incinérateur, cette quantité d'air n'est pas passée dans la colonne d'eau.

Il faut d'abord considérer qu'avec le mélange d'air frais cet inconvénient est minimisé.

D'autre part, son passage dans le four (2) contenant le bois à sécher subit une filtration naturelle qui piège les particules solides.

C'est donc un air seulement chargé de vapeur d'eau, mais débarrassé de poussières, que l'on rejette à l'atmosphère par les cheminées 24 dont le clapet 23 permet le passage.

La quantité de calories utilisées pour le séchage reste très limitée. Pour un débit équivalent des ventilateurs 4 et 18, les températures passent de 1000° environ à 150° dans la gaine de séchage.

Cet abaissement de température est obtenu par une adjonction d'air plus frais ambiant au moyen d'un cône de dilution.

Le cône entonnoir femelle est réglable par rapport au cône dard mâle.

La variation du cône mobile change la proportion du mélange chaud/frais et l'on obtient d'une façon relativement précise une plage de température constante.

Les calories utilisées pour le séchage représentent 20% environ de celles produites.

On utilise éventuellement un ou plusieurs systèmes identiques intermédiaires pour prélever le reste des calories disponibles.

Ainsi, on intercale un dilueur 25 avec sa gaine 26 qui conduira de l'air chaud au ventilateur 27 chargé d'insuffler des calories pour des utilisations annexes à partir d'une sortie 28.

Ces utilisations sont multiples : chauffages domestiques ou industriels, serres, utilisations multiples avec ou sans échangeur - air/liquides caloporteurs - bois torréfiés -, etc.

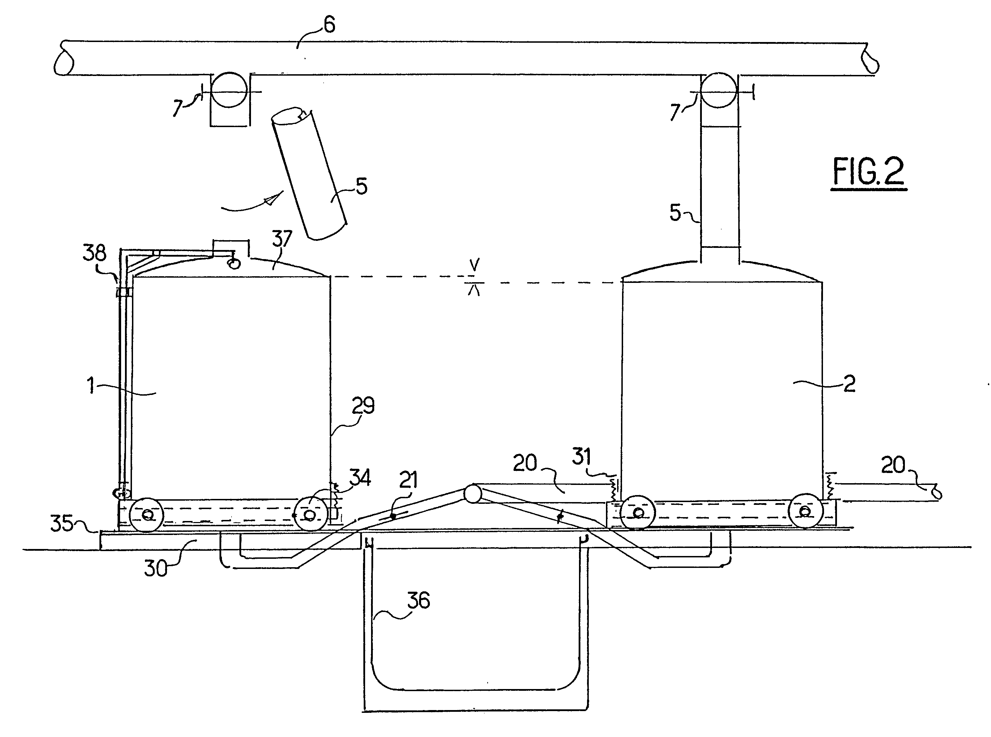

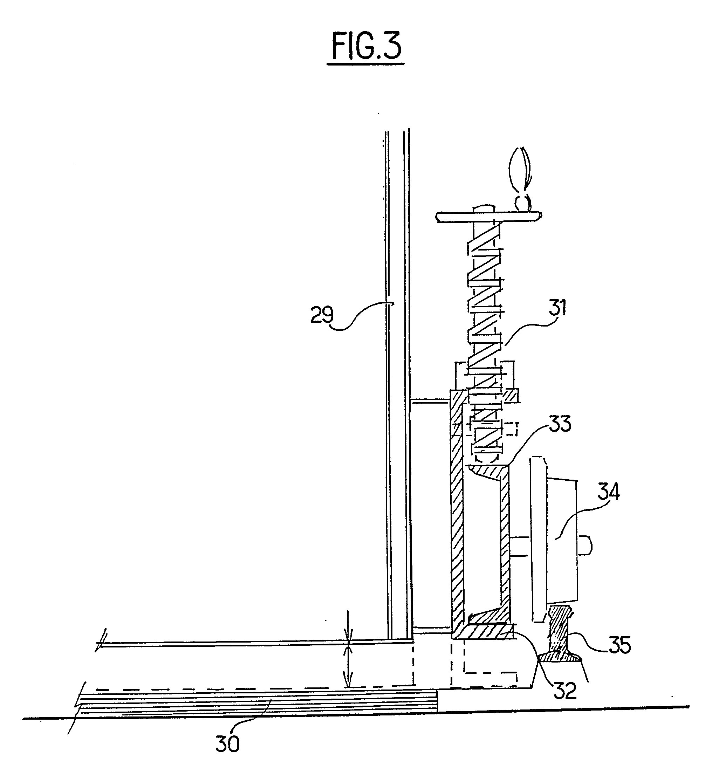

Cette description du parcours des gaz étant achevée, il convient de se reporter aux figures 2 et 3 relatives au fonctionnement du four combiné.

Le four 1 ayant fini sa carbonisation, on obture le clapet 7 afin de ne pas perturber les gaz contenus dans le collecteur 6 provenant des autres fours en cours de carbonisation.

On peut ainsi le désolidariser de l'installation en retirant le manchon de la cheminée amovible 5.

L'opérateur peut ensuite procéder à l'opération de vidage.

Sous l'action des vis de vérin 31 situées aux quatre angles d'un cadre mobile 33 solidaire de la virole du four 29, un espace différentiel se crée par rapport au cadre fixe 32 assujetti à un train de roues 34 reposant sur deux rails 35.

Le four est décollé du béton réfractaire 30 sur lequel il reposait pendant les opérations de séchage, puis de carbonisation.

Quelques millimètres de ce soulèvement suffisant pour permettre au four d'être poussé sur les rails.

Le charbon de bois glisse sur le sol et se déverse en contrebas dans un conteneur 36 situé dans une fosse.

Le vidage terminé, le four est repoussé à son emplacement primitif. Suivant l'opération inverse, les vérins sont desserrés, le four se trouve prêt à une nouvelle opération et à recevoir un garnissage de bois, après escamotage du couvercle amovible 37 au moyen de la potence télescopique 38.

Il est évident que tout autre moyen de soulèvement ou de mobilité, aussi bien de la potence que des fours, peuvent être utilisés, sans pour cela sortir du cadre de la présente invention.

Simultanément, un couvercle étanche est assujetti sur le conteneur afin de faire office d'étouffoir au charbon encore incandescent.

Le conteneur plein est emmené sur une aire de refroidissment, alors qu'un autre, vide, est disposé à sa place pour subir la même opération lors du déchargement du four 2.

Une installation idéale fonctionne en continu avec quatre modules standards, tels que celui décrit sur la figure 2.

On obtient alors une marche continue permettant un séchage poussé et une carbonisation rapide et complète.

## Revendications

1. Dispositif de fabrication de charbon de bois, caractérisé par le fait qu'il comporte au moins deux fours de carbonisation sans fond, dont au moins un four est en phase de carbonisation du bois, ce four étant relié à un dispositif d'incinération des gaz produits au cours de la carbonisation, relié à un extracteur précédé d'un moyen de dilution des gaz chauds, suivi éventuellement d'un dispositif de lavage, et au moins un autre four est chargé de bois humide et est relié à un moyen de prélèvement des gaz chauds produits au cours de l'incinération des fours en phase de carbonisation en amont de l'extracteur, ledit moyen de prélèvement étant équipé d'un moyen de dilution des gaz chauds pour les amener à une température compatible avec le bois destiné à être séché.

2. Dispositif selon la revendication 1, caractérisé par le fait que les fours sont disposés sur une dalle en béton réfractaire.

3. Dispositif selon la revendication 1 ou 2, caractérisé par le fait que la partie haute du (des) four(s) en phase de carbonisation est équipée d'une cheminée à manchon escamotable, comportant deux voies, une voie dirigeant les gaz chauds vers l'incinérateur lorsque le four fonctionne en carbonisation.

4. Dispositif selon l'une quelconque des revendications 1 à 3, caractérisé par le fait que l'incinérateur est équipé d'un tuyau muni d'un dilueur conique permettant de prélever une quantité d'air suffisante pour faire passer la température à la sortie de l'incinérateur jusqu'à une température inférieure ou égale à environ 200° C.

5. Dispositif selon l'une quelconque des revendications 1 à 4, caractérisé par le fait que le dispositif de lavage comporte une colonne de lavage, en partie immergée dans une bâche de réception, dont la surface en eau forme une garde hydraulique, la colonne étant équipée de diffuseurs à pulvérisation.

6. Dispositif selon l'une quelconque des revendications 1 à 5, caractérisé par le fait que le tuyau à la sortie de l'incinérateur comporte une dérivation reliée à une gaine de répartition équipée d'un ventilateur adaptée pour amener une partie du gaz chaud après dilution jusqu'à un four rempli de bois humide.

7. Dispositif selon l'une quelconque des revendications 1 à 6, caractérisé par le fait que le(s) four(s) fonctionnant en dispositif de séchage, comporte(nt) à sa (leur) partie inférieure une entrée de gaz chaud pratiquée dans la dalle supportant le four.

8. Dispositif selon l'une quelconque des revendications 1 à 7, caractérisé par le fait que la dérivation prélevant une partie du gaz chaud à la sortie de l'incinérateur en vue du séchage comporte un dispositif de dilution constitué par un dilueur conique susceptible de fait passer la température de 900 à 1000° C à la sortie de l'incinérateur à une température inférieure à la température d'inflammation du bois.

9. Dispositif selon l'une quelconque des revendications 1 à 8, caractérisé par le fait que le tuyau à la sortie de l'incinérateur comporte d'autres dérivations équipées de dilueurs coniques susceptibles de prélever du gaz chaud.

10. Dispositif selon l'une quelconque des revendications 1 à 9, caractérisé par le fait que les fours sont équipés d'un double cadre métallique de section différente pouvant coulisser l'un dans l'autre, le premier cadre étant fixé sur la périphérie du four et l'autre cadre possédant un jeu de quatre roues se déplaçant sur des rails eux-mêmes fixés sur un châssis de répartition générale, les deux cadres variant l'un par rapport à l'autre sous l'effet de quatre vérins.

11. Dispositif selon l'une quelconque des revendications 1 à 10, caractérisé par le fait qu'il est équipé d'une fosse en contrebas située dans le prolongement des rails muni d'un conteneur de volume suffisant pour recevoir la totalité du charbon produit par les fours de carbonisation.

12. Dispositif selon l'une quelconque des revendications 1 à 11, caractérisé par le fait que le conteneur situé dans la fosse en contrebas est équipé d'un couvercle étanche permettant au conteneur de faire office d'étouffoir du charbon incandescent.

13. Dispositif selon l'une quelconque des revendications 1 à 11, caractérisé par le fait que le four est équipé d'un mât terminé en son sommet par une potance en équerre fixée au couvercle du four d'un fourreau de section plus importante que le mât dans lequel ledit mât est mobile, d'un cric hydraulique permettant une variation verticale dudit mât, et d'une poignée permettant d'effectuer un mouvement giratoire au couvercle; de telle façon à soulever et à faire pivoter le couvercle du four.

14. Procédé de fabrication du charbon de bois, caractérisé par le fait que :

(i) l'on charge dans une première série de fours du bois humide;

(ii) l'on soumet dans une seconde série de fours du bois séché à une réaction de carbonisation;

(iii) l'on fait passer au moyen d'un extracteur les gaz résultant de la carbonisation dans un incinérateur permettant de décomposer les gaz ainsi produits;

(iv) les gaz chauds résultant de l'étape d'incinération sont pour partie lavés, après dilution dans une tour de lavage et pour partie recyclés, après dilution de l'air pour faire passer la température de ces gaz à la sortie l'incinérateur à une température inférieur à la température d'inflammation du bois, vers ladite première série de fours contenant du bois humide en vue de le sécher.

15. Procédé selon la revendication 14, caractérisé par le fait que l'on procède après la réaction de carbonisation, à une désolidarisation du four ayant servi à la carbonisation et on l'amène après décollement du four de son socle vers un conteneur situé dans une fosse de déchargement susceptible de recevoir le charbon de bois ainsi produit, ce conteneur étant fermé de façon étanche après chargement pour étouffer le charbon de bois encore incandescent.

16. Procédé selon la revendication 14 ou 15, caractérisé par le fait qu'une partie des gaz chauds résultant de l'incinérateur est dérivée après dilution éventuelle pour être utilisée dans des dispositifs de chauffage.

FIG.1

**FIG.2**

# FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 977 947 (O. PYLE)<br>* Colonne 9, ligne 54 - colonne 10, ligne 61; figure 1 *<br>--- | 1 | C 10 B 53/02<br>F 23 G 5/027 |
| A | FR-A- 884 236 (G. ALEPEE)<br>* Page 3, lignes 3-87; figure 1 *<br>--- | 1 | |
| A | US-A-4 280 878 (G.E. SPRENGER)<br>* Colonne 2, ligne 52 - colonne 5, ligne 46; figure 1 *<br>--- | 1,4,6,8 | |
| A | FR-A- 897 642 (J. GOHIN)<br>* Page 5, ligne 23 - page 6, ligne 9; figure 1 *<br>--- | 1,4,6,8 | |
| A | FR-A-2 588 484 (A.J. LEROUX)<br>* Page 4, lignes 1-12; figure *<br>----- | 1,5 | |

**DOMAINES TECHNIQUES RECHERCHES (Int. Cl.4)**

C 10 B
F 23 G

Le présent rapport a été établi pour toutes les revendications

| Lieu de la recherche | Date d'achèvement de la recherche | Examinateur |
|---|---|---|
| LA HAYE | 10-11-1988 | PYFFEROEN K. |